# FASCICULE DE BREVET EUROPEEN

(11) **EP 0 375 482 B1**
(45) Date de publication et mention de la délivrance du brevet: **26.01.1994**
(21) Numéro de dépôt: 89403255.6
(22) Date de dépôt: 24.11.1989
(51) Int. Cl.: F16L 33/02, B29C 61/06

(54) **Procédé de positionnement des colliers de serrage aux extrémités des tuyaux souples**
Verfahren zum Positionieren von Schellen an den Enden von Schläuchen
Process for positioning clamps at the ends of supple hoses

(30) Priorité: 20.12.1988 FR 8816797
(43) Date de publication de la demande: 27.06.1990
(73) Titulaire: COMPAGNIE DES PRODUITS INDUSTRIELS DE L'OUEST (C.P.I.O.), 44473 Carquefou Cédex (FR)
(72) Inventeur: Bergougnoux, Didier, F-44470 Carquefou (FR)
(74) Mandataire: Foster, David Martyn

(56) Documents cités:
- DE-A- 3 543 717
- FR-A- 2 306 785
- GB-A- 1 057 936
- GB-A- 1 548 100

## Description

L'invention concerne un ensemble comprenant un tuyau souple ou un soufflet doté d'un collier de fixation s'étendant autour de lui et pouvant être déplacé dans un sens radial par rapport à l'élément souple comme suite à l'actionnement d'un mécanisme de fixation du collier, et un moyen de positionnement relié à l'élément souple et maintenant le collier en une position axiale et circonférentielle prédéterminée par rapport à l'élément souple, mais permettant d'accéder de l'extérieur au mécanisme de fixation, et permettant le mouvement du collier dans ledit sens radial.

L'invention concerne aussi une méthode correspondante.

Un tel ensemble et une telle méthode sont divulgués dans le brevet britannique GB-A-1 057 936. L'ensemble et la méthode divulgués présentent l'avantage que le collier de fixation est maintenu en une position sur le tuyau souple qui permet à un mécanicien d'accéder facilement au mécanisme de fixation lorsque le tuyau se trouve en sa position finale (telle que dans le système de refroidissement d'un moteur de véhicule). Dans cette divulgation, toutefois, le collier de fixation est maintenu en place sur le tuyau au moyen de cosses ou de pinces, et la fixation de ces dernières sur le tuyau exige une opération de réalisation relativement difficile pour production en série. C'est là le problème que l'invention cherche à résoudre.

Un tel ensemble et une telle méthode sont aussi divulgués dans le GB-A-1 548 100. Dans ce cas, le moyen de positionnement est sous forme de corps cylindrique à bout ouvert qui s'emmanche sur le bout du tuyau et constitue un logement pour le collier de fixation, avec ouverture passant au travers pour permettre d'accéder de l'extérieur au mécanisme de fixation. Toutefois, bien que ce système assure le positionnement axial du collier de fixation, il ne donne pas de positionnement circonférentiel satisfaisant. L'invention se propose aussi de résoudre ce problème.

Selon l'invention, l'ensemble tel qu'indiqué ci-haut est caractérisé par le fait que l'élément de positionnement comprend une gaine thermorétractable qui embrasse le collier et est fixée sur l'élément souple sous l'effet de la chaleur qui a été appliquée à la gaine thermo-rétractable qui s'est en conséquence rétractée sur l'élément souple, la gaine thermorétractable étant dotée d'une découpe ou d'une ouverture s'alignant sur le, et assurant l'accès au, mécanisme de fixation du collier.

Selon l'invention, la méthode correspondante est caractérisée de manière correspondante.

De telles gaines thermorétractables sont constituées d'éléments cylindriques de faible épaisseur, réalisés en matériau thermoplastique amorphe, généralement obtenu par extrusion. Après extrusion, chaque élément est déformé à chaud dans le sens d'une augmentation de diamètre et refroidi brutalement ; ceci bloque les contraintes internes du matériau ; tout réchauffement ultérieur se traduira par un relâchement de ces dernières avec un retour au diamètre initial.

De telles gaines thermorétractables sont couramment utilisées en emballage ou pour protéger, totalement ou partiellement, un tuyau contre des agressions extérieures.

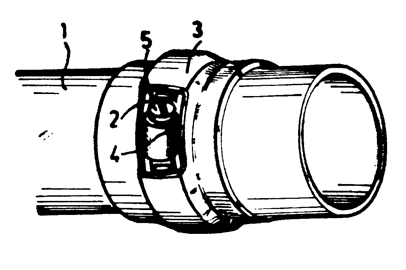

La figure unique montre un collier maintenu en position, axialement et circulairement, à l'aide d'une gaine thermorétractable.

Plus précisément, la réalisation d'un tel procédé peut se faire de deux manières principales, non limitatives à la portée de la présente invention.

Soit l'on place sur le tuyau terminé 1, c'est-à-dire complètement vulcanisé s'il s'agit d'un tuyau en caoutchouc, le collier 2 et sa gaine de positionnement 3 présentant la découpe 4 nécessaire à l'accès du mécanisme de serrage 5. Après indexage sur un gabarit de positionnement, l'ensemble est soumis à une source de chaleur, par exemple un courant d'air chaud ou le rayonnement d'une lampe infrarouge. L'effet mémoire provoque la contraction de la gaine, avec serrage sur le collier ainsi maintenu en position.

Soit l'on place le collier et sa gaine de positionnement sur l'ébauche du tuyau, c'est-à-dire sur l'élément cylindrique de caoutchouc cru. Pour obtenir la forme définitive du tuyau, l'ébauche est généralement emmanchée sur une forme (opération de tringlage), puis cuite à l'autoclave pour vulcanisation et enfin enlevée de la forme (détringlage). La forme générale du tuyau est conservée par l'opération de vulcanisation.

Il est possible de prévoir aux extrémités de la tringle de formage des gabarits de positionnement, qui indexent les colliers d'extrémité et les positionnent, axialement et circulairement. L'ensemble ébauche + colliers de serrage + gaines de positionnement est alors introduit dans l'autoclave. Sous l'action de la chaleur, les deux opérations de vulcanisation et de rétraction des gaines s'effectuent simultanément.

Les deux manières de réaliser le procédé objet de la présente invention et leurs variantes éventuelles permettent d'obtenir un tuyau équipé de ses colliers de serrage, fixés au tuyau et positionnés par rapport à lui. L'ensemble peut alors être livré pour approvisionner directement les chaînes de montage et gagner le temps nécessaire au montage des divers éléments sur la chaîne principale. De plus, ce procédé peut permettre une opération de serrage du collier entièrement automatisée.

Advantageusement, on pourra utiliser des gaines de couleur permettant, soit une identification de la nature du circuit de fluide, soit une différenciation des deux extrémités d'un tuyau pour éviter une erreur de montage.

Le procédé objet de la présente invention s'applique particulièrement bien à tout tuyau souple. Son application est valable pour tout système nécessitant le montage d'un collier, comme par exemple les soufflets de transmission et de direction des véhicules automobiles.

## Revendications

1. Ensemble comprenant un tuyau souple (1) ou soufflet doté d'un collier de fixation (2) s'étendant autour de lui et déplaçable dans un sens radial par rapport à l'élément souple (1) comme suite à l'actionnement d'un dispositif (5) de fixation du collier (2) et d'un moyen de positionnement (3) relié à l'élément souple (1) et maintenant le collier de fixation (2) en une position axiale et circonférentielle prédéterminée par rapport à l'élément souple (1) tout en permettant d'accéder de l'extérieur au dispositif de fixation (5) et en permettant le mouvement du collier (2) dans ledit sens radial, caractérisé par le fait que le moyen de positionnement comprend une gaine thermorétractable (3) qui embrasse le collier (2) et se fixe sur l'élément souple (1) sous l'effet de la chaleur qui a été appliquée à la gaine themorétractable qui s est en conséquence rétractée sur l'élément souple (1), la gaine thermorétractable étant dotée d'une découpe ou d'une ouverture (4) s'alignant sur le, et assurant l'accès au, mécanisme (5) de fixation du collier (2).

2. Ensemble selon la revendication 1, caractérisé par le fait que l'élément souple (1) est fabriqué en caoutchouc qui a été vulcanisé par la chaleur appliquée à la gaine thermorétractable (3).

3. Procédé de fabrication d'un ensemble selon la revendication 1 comprenant les stades de positionnement du collier (2) sur l'élément souple (1) et de maintien du collier de fixation (2) en la position prédéterminée sur l'élément souple (1) au moyen d'un élément de positionnement (3) séparé, caractérisé par les stades de l'alignement de l'ouverture (4) d'accès de la gaine thermorétractable sur le mécanisme de fixation (5) du collier de fixation (2) et de l'alignement de la gaine thermorétractable (3) et du collier de fixation (2) circonférentiellement et axialement sur l'élément souple (1) pour obtenir ladite position prédéterminée, et de fixation de la gaine thermorétractable (3) sur l'élément souple (1) par l'application de chaleur sur la gaine thermorétractable (3) pour obtenir sa rétraction et sa fixation ainsi que celle du collier (2) en ladite position prédéterminée.

4. Procédé selon la revendication 3, caractérisé, par le fait que l'élément souple (1) est fabriqué en caoutchouc non vulcanisé de sorte que ladite application de chaleur vulcanise le caoutchouc et aussi donne lieu à la rétraction de la gaine thermorétractable (3).

5. Procédé selon la revendication 3 ou 4, caractérisé par le fait que l'étape d'alignement du collier (2) et de la gaine thermorétractable (3) par rapport à l'élément souple (1) s'effectue par l'emploi d'un gabarit de positionnement.

## Claims

1. Assembly comprising a hose (1) or bellows provided with a band clip (2) extending around it and capable of being moved in a radial direction with respect to the flexible element (1) following the operation of a device (5) for fastening the band (2) and of a positioning means (3) connected to the flexible element (1) and holding the band clip (2) in a predetermined axial and circumferential position with respect to the flexible element (1), whilst allowing access from the outside to the fastening device (5) and allowing movement of the band (2) in the said radial direction, characterised in that the positioning means comprises a heat-shrink jacket (3) which surrounds the band (2) and is fixed onto the flexible element (1) under the effect of the heat which has been applied to the heat-shrink jacket, which is in consequence shrunk onto the flexible element (1), the heat-shrink jacket being provided with a cutout or an opening (4) aligned on, and allowing access to, the mechanism (5) for fastening the band (2).

2. Assembly according to Claim 1, characterised in that the flexible element (1) is made from rubber which has been vulcanised by the heat applied to the heat-shrink jacket (3).

3. Method for manufacturing an assembly according to Claim 1, comprising the steps of positioning the band (2) on the flexible element (1) and holding the band clip (2) in the predetermined position on the flexible element (1) by means of a separate positioning element (3), characterised by the steps of aligning the access opening (4) of the heat-shrink jacket on the mechanism (5) for fastening the band clip (2) and for aligning the heat-shrink jacket (3) and the band clip (2) circumferentially and axially on the flexible element (1), in order to obtain the said predetermined position, and of fastening the heat-shrink jacket (3) on the flexible element (1) by applying heat to the heat-shrink jacket (3) in order to shrink it and fasten it, as well as with a band (2) in the said predetermined position.

4. Method according to Claim 3, characterised in that the flexible element (1) is made from non-vulcanised rubber, so that the said application of heat vulcanises the rubber and also gives rise to shrinkage of the heat-shrink jacket (3).

5. Method according to Claim 3 or 4, characterised in that the step of aligning the band (2) and the heat-shrink jacket (3) with respect to the flexible element (1) is carried out by using a positioning template.

## Patentansprüche

1. Aufbau, der einen elastischen Schlauch (1) oder Balg umfaßt, versehen mit einer Befestigungsschelle (2), die sich um ihn herum erstreckt und in einer radialen Richtung beweglich ist, bezogen auf das elastische Element (1), als Folge der Betätigung einer Befestigungsvorrichtung (5) der Schelle (2), und einer Positionierungseinrichtung (3), verbunden mit dem elastischen Element (1), und die Befestigungsschelle (2) in einer vorbestimmten Radial- und Umfangsposition festhaltend bezuglich des elastischen Elements (1), dabei Zugang zu der Befestigungseinrichtung (5) von außen gestattend, und die Bewegung der Schelle in der genannten Radialrichtung gestattend,
dadurch **gekennzeichnet,**
daß die Positioniereinrichtung eine Thermo-Schrumpfhülle (3) enthält, welche die Schelle (2) umgibt, und sich befestigt auf dem elastischen Element (1) unter der Wirkung der Wärme, der die Thermo-Schrumpfhülle ausgesetzt wurde, die sich folglich auf dem elastischen Element (1) zusammengezogen hat, wobei die Thermo-Schrumpfhülle versehen ist mit einem Ausschnitt oder einer Öffnung (4), ausgericht auf, und Zugang gewährleistend zu dem Befestigungsmechanismus (5) der Schelle (2).

2. Aufbau nach Anspruch 1, dadurch gekennzeichnet, daß das elastische Element aus Gummi hergestellt ist, vulkanisiert durch die Wärme, die auf die Thermo-Schrumpfhülle (3) angewandt wurde.

3. Herstellungsverfahren eines erfindungsgemäßen Aufbaus nach Anspruch 1, die Stadien der Positionierung der Schelle (2) auf dem elastischen Element (1) und des Festhaltens der Befestigungsschelle (2) in der vorbestimmten Position (1) mittels eines getrennten Befestigungselements (3) umfassend, gekennzeichnet durch die Stadien des Ausrichtens der Zugangsöffnung (4) der Thermo-Schrumpfhülle auf dem Befestigungsmechanismus (5) der Befestigungsschelle (2), und des Ausrichtens der Thermo-Schrumpfhülle (3) und der Befestigungsschelle (2), radial und axial, auf dem elastischen Element (1), um die genannte vorbestimmte Position zu erhalten, und der Befestigung der genannten Thermo-Schrumpfhülle (3) auf dem elastischen Element (1) durch Anwendung von Wärme auf die Thermo-Schrumpfhülle (3), um ihre Schrumpfung und ihre Befestigung zu erzielen, sowie die der Schelle (2) in der genannten vorbestimmten Position.

4. Verfahren nach Anspruch 3, dadurch gekennzeichnet, daß das elastische Element (1) hergestellt ist aus nicht vulkanisiertem Kautschuk, so daß die genannte Anwendung von Wärme das Gummi vulkanisiert und auch die Schrumpfung der Thermo-Schrumpfhülle (3) veranlaßt.

5. Verfahren nach Anspruch 3 oder 4, dadurch gekennzeichnet, daß der Ausrichtschritt der Schelle (2) und der Thermo-Schrumpfhülle (3) bezuglich des elastischen Elements (1) durchgeführt wird unter Verwendung einer Positionierschablone.
